# EUROPÄISCHE PATENTANMELDUNG

(11) **EP 3 696 757 A1**
(43) Veröffentlichungstag der Anmeldung: **19.08.2020**
(21) Anmeldenummer: 19164542.3
(22) Anmeldetag: 22.03.2019
(51) Int. Cl.: G06Q 10/10

(54) **VERFAHREN UND SYSTEM ZUR AUTOMATISCHEN BEWERTUNG VON ERRICHTERUNTERNEHMEN FÜR FEUERLÖSCHANLAGEN**

(30) Priorität: 12.02.2019 EP 19156750; 14.03.2019 EP 19162899
(71) Anmelder: VdS Schadenverhütung GmbH, 50735 Köln (DE)
(72) Erfinder: Reinermann, Robert, 50735 Köln (DE); Baier, Claas, 50735 Köln (DE)
(74) Vertreter: Strehlke, Ingo Kurt

(57) **Zusammenfassung**

Es wird ein Verfahren zur automatischen Bewertung von Errichterunternehmen für Feuerlöschanlagen vorgeschlagen, wobei mehrere Kriterien zur Zertifizierung eines Errichterunternehmens festgelegt sind, wobei systemseitig eine Bewertungsmetrik vorgegeben ist, mittels welcher der Angaben zur Erfüllung der Kriterien automatisch bewertet werden und bestimmt wird, ob Voraussetzungen für eine Zertifizierung des Errichterunternehmens erfüllt sind. Des Weiteren wird ein entsprechendes System zur automatischen Bewertung von Errichterunternehmen von Feuerlöschanlagen vorgeschlagen.

## Beschreibung

Die vorliegende Erfindung betrifft ein Verfahren und ein System zur automatischen Bewertung von Errichterunternehmen, insbesondere für Feuerlöschanlagen.

Ein Errichterunternehmen im Sinne der vorliegenden Erfindung ist ein Unternehmen, das Feuerlöschanlagen errichtet. Die Errichtung einer Feuerlöschanlage umfasst vorzugsweise die Planung, Projektierung, Montage, Inbetriebnahme, Überprüfung, Abnahme und/oder Übergabe einer Feuerlöschanlage an einen Betreiber.

Die vorliegende Erfindung betrifft ganz besonders bevorzugt die Zertifizierung von Errichterunternehmen für Feuerlöschanlagen, kann grundsätzlich jedoch auch auf die Zertifizierung von Errichterunternehmen anderer, insbesondere sicherheitsrelevanter Anlagen in vorteilhafter Weise angewendet werden. Dabei hat sich die Erfindung in Zusammenhang mit der Zertifizierung von Errichterunternehmen von Feuerlöschanlagen als besonders vorteilhaft erwiesen. Vorteile werden insbesondere durch eine durch die Erfindung gesteigerte Effektivität, Effizienz und/oder Reproduzierbarkeit des Zertifizierungsprozesses und eine damit einhergehende potenziell verbesserte Zuverlässigkeit und Sicherheit errichteter Feuerlöschanlagen erreicht.

Feuerlöschanlagen sind technische Anlagen, die dazu ausgebildet sind, einen Brand mit einem Löschmittel zu löschen. Insbesondere bezieht sich die vorliegende Erfindung auf Errichterunternehmen für stationäre bzw. fest in einem Betrieb installierte Feuerlöschanlagen. Einige Beispiele für (stationäre) Feuerlöschanlagen sind Sprinkleranlagen, Sprühwasserlöschanlagen, Schaumlöschanlagen, Wassernebelsysteme, Funkenlöschanlagen, Gaslöschanlagen, Inertisierungsanlagen und Sauerstoffreduzierungsanlagen.

Für eine fehlerfreie Funktionsweise einer Feuerlöschanlage ist es von höchster Wichtigkeit, dass die Feuerlöschanlage von einem qualifizierten Unternehmen errichtet wird. Zum Nachweis der Qualifikation können Errichterunternehmen ein Anerkennungs- bzw. Zertifizierungsverfahren bei einer Zertifizierungsstelle durchlaufen. Bei dem Anerkennungsverfahren wird eine Vielzahl von Kriterien geprüft und bei hinreichender Erfüllung der Kriterien schließlich ein Zertifikat ausgestellt.

Ein Nachteil bei bekannten Zertifizierungsverfahren besteht darin, dass zum Erhalt eines Zertifikats eine große Vielzahl verschiedener Kriterien geprüft werden muss. Dabei gibt es Kriterien, deren Erfüllung für den Erhalt eines Zertifikats essentiell ist, sowie Kriterien mit einer geringeren Relevanz. Falls bei einer Prüfung der Kriterien festgestellt wird, dass die überwiegende Mehrzahl der Kriterien erfüllt ist und nur minimale Mängel in der Erfüllung eines Kriteriums geringer Relevanz festgestellt werden, kann üblicherweise dennoch ein Zertifikat ausgestellt werden.

Ziel ist in diesem Zusammenhang, dass in der Praxis immer ein einheitlicher Bewertungsmaßstab angelegt wird, der für alle Errichterunternehmen, die sich für eine Zertifizierung bewerben, vergleichbar, vorzugsweise identisch, ist.

Es ist daher eine Aufgabe der vorliegenden Erfindung, ein Verfahren und ein System zur automatischen Bewertung von Errichterunternehmen für Feuerlöschanlagen sowie ein Computerprogramm anzugeben, wobei eine einheitliche Bewertung von Errichterunternehmen für Feuerlöschanlagen gewährleistet ist, vorzugsweise wobei ein Anerkennungs- bzw. Zertifizierungsverfahren nachvollziehbar, objektiv und effizient gestaltet werden kann.

Die obige Aufgabe wird gelöst durch ein Verfahren gemäß Anspruch 1, ein System gemäß Anspruch 15 oder ein Computerprogramm gemäß Anspruch 16. Vorteilhafte Weiterbildungen sind Gegenstand der Unteransprüche.

Bei dem vorschlagsgemäßen Verfahren zur automatischen Bewertung von Errichterunternehmen für Feuerlöschanlagen sind mehrere Kriterien zur Zertifizierung eines Errichterunternehmens festgelegt. Hierzu ist systemseitig eine Bewertungsmetrik vorgegeben, mittels der Angaben zur Erfüllung der Kriterien automatisch bewertet werden und, insbesondere automatisch bzw. mittels der Bewertungsmetrik, bestimmt wird, ob Voraussetzungen für eine Zertifizierung des Errichterunternehmens erfüllt sind.

Eine automatische Bewertung und/oder eine systemseitige Vorgabe der Bewertungsmetrik sind einer objektiven und einheitlichen Bewertung zuträglich.

"Angaben zur Erfüllung eines Kriteriums" im Sinne der vorliegenden Erfindung sind insbesondere Angaben bzw. Informationen dazu, ob bzw. in wie weit das Kriterium erfüllt ist. Die Bewertung eines Errichterunternehmens erfolgt insbesondere auf Basis dieser Angaben. Die Angaben können in vielfältiger Form vorliegen, insbesondere wobei zu unterschiedlichen Kriterien auch unterschiedliche Angaben möglich sind. Beispiele für Angaben zur Erfüllung eines Kriteriums sind boolesche Angaben wie "Kriterium erfüllt", "Kriterium nicht erfüllt", "Nachweis vorhanden", "Nachweis nicht vorhanden" o. dgl. oder zahlenmäßige Angaben wie etwa "40 Einheiten vorhanden" o. dgl.

In einem optionalen ersten, vorzugsweise vorgelagerten Schritt wird ermittelt bzw. geprüft, ob bzw. inwieweit das Errichterunternehmen die Kriterien erfüllt. Mit anderen Worten werden in diesem Schritt Angaben zur Erfüllung der Kriterien erstellt, ermittelt und/oder eingetragen. Dies kann automatisch und/oder manuell erfolgen, z. B. durch einen Mitarbeiter der Zertifizierungsstelle oder einen Mitarbeiter des Errichterunternehmens. Beispielsweise werden entsprechende Informationen und/oder Angaben, wie Dokumente, die zum Nachweis der Erfüllung der Kriterien dienen, von dem Errichterunternehmen angefordert, (elektronisch) erfasst und/oder geprüft. Alternativ oder zusätzlich ist es möglich, dass zumindest einige Kriterien direkt vor Ort bei dem Errichterunternehmen und/oder während der Errichtung einer Feuerlöschanlage durch das Errichterunternehmen geprüft werden. Eine automatische Ermittlung von Angaben zur Erfüllung der Kriterien kann erfolgen, indem entsprechende Angaben bzw. Dokumente vollständig oder teilweise automatisch erfasst, beschafft und/oder geprüft werden, beispielsweise durch Datenbankabruf, Einlesen oder Erfassen von Benutzereingaben.

Zur Prüfung der Kriterien sind vorzugsweise ein oder mehrere Kriterienkatalog(e) bzw. Checklisten vorgesehen, in denen oder mit deren Hilfe festgehalten werden kann, ob bzw. inwieweit die Kriterien erfüllt sind.

Kriterienkatalog(e) können beispielsweise in Papierform und/oder in elektronischer Form, insbesondere als elektronische Liste bzw. Tabelle, vorliegen, ausgebildet sein und/oder verwendet werden. Liegen diese in Papierform vor, werden sie vorzugsweise eingelesen bzw. digitalisiert der automatischen Bewertung zugeführt. Zur strukturierten Prüfung der Kriterien bzw. Erfassung von Angaben zur Erfüllung der Kriterien kann eine automatische Benutzerführung vorgesehen sein. Die automatische Benutzerführung kann einen Anwender, insbesondere einen Mitarbeiter der Zertifizierungsstelle oder eines Errichterunternehmens, automatisch durch den bzw. die Kriterienkataloge führen. Dies verbessert die Vollständigkeit der Angaben und Dokumente und erleichtert eine zuverlässige, strukturierte Ermittlung bzw. Prüfung der Erfüllung der Kriterien.

Es ist vorzugsweise vorgesehen, dass mindestens eines der Kriterien zwingend zur Zertifizierung erforderlich bzw. zu erfüllen ist. Dies bedeutet, dass die Voraussetzungen für eine Zertifizierung des Errichterunternehmens nicht erfüllt sind, wenn das zwingend erforderliche Kriterium nicht erfüllt ist. Die Erfüllung dieses mindestens einen Kriteriums, das zwingend zur Zertifizierung erforderlich ist, wird vorzugsweise automatisch bestimmt. Die Bewertungsmetrik kann entsprechend ausgebildet sein.

Ein zwingend erforderliches Kriterium ist insbesondere ein besonders wichtiges Kriterium, auf dessen Erfüllung keinesfalls verzichtet werden kann, beispielsweise wenn das Errichterunternehmen keine ausreichende Betriebshaftpflichtversicherung vorweisen kann, wenn das Errichterunternehmen nicht über ein zertifiziertes Qualitätsmanagementsystem, beispielsweise nach EN ISO 9001, verfügt oder wenn das Personal des Unternehmens nicht ausreichend geschult ist.

Vorzugsweise ist jedem Kriterium mittels der Bewertungsmetrik ein Bewertungsattribut zugeordnet. Das Bewertungsattribut repräsentiert die Relevanz des Kriteriums. Beispielsweise kann in dem Bewertungsattribut bzw. mittels des Bewertungsattributs festgelegt sein, dass ein Kriterium ein zwingend erforderliches Kriterium ist. Es ist auch möglich, dass die Bewertungsattribute der Kriterien durch Zahlen bzw. Faktoren oder Gewichte allgemein gebildet sind, wobei besonders wichtigen Kriterien eine hohe Zahl bzw. ein hoher Faktor oder allgemein ein höheres Gewicht zugeordnet wird und weniger wichtigen Kriterien entsprechend eine geringere Zahl bzw. ein geringerer Faktor oder allgemein ein geringeres zugeordnet wird.

Gemäß eines weiteren Aspekts ist mindestens eines der Kriterien teilweise erfüllbar, wobei diesem Kriterium bei der Bewertung mittels der Bewertungsmetrik ein Erfüllungskoeffizient zugeordnet wird. Der Erfüllungskoeffizient kann dem Kriterium, insbesondere zusätzlich zu dem Bewertungsattribut, zugeordnet werden. Der Erfüllungskoeffizient repräsentiert, in welchem Maße das Kriterium erfüllt ist. Insbesondere wird der Erfüllungskoeffizient bzw. dessen Wert auf Basis der zuvor erfassten Angaben zur Erfüllung der Kriterien bestimmt.

Beispielsweise kann ein Kriterium vorgesehen sein, in dem festgelegt ist, welche Menge und Art von Ersatzteilen durch ein Errichterunternehmen bevorratet werden muss. Ein Kriterium, nach dem 50 Sprinkler einer bestimmten Spezifikation bevorratet werden müssen, kann beispielsweise dadurch teilweise erfüllt werden, dass die Anzahl der geforderten Sprinkler nicht erreicht wird, beispielsweise wenn nur 45 Sprinkler bzw. 90 % der geforderten 50 Sprinkler bevorratet sind. Dies kann der Erfüllungskoeffizient repräsentieren. Alternativ oder zusätzlich kann ein solches Kriterium dadurch teilweise erfüllt werden, dass zwar die Menge der bevorrateten Sprinkler der geforderten Menge von 50 Stück entspricht, aber die Spezifikation nicht der geforderten Spezifikation entspricht, beispielsweise dadurch dass die Schirmsprinkler eine andere Nennöffnungstemperatur und/oder eine andere Ansprechempfindlichkeit als gemäß dem Kriterium gefordert aufweisen. Dies kann alternativ oder zusätzlich durch den Erfüllungskoeffizienten repräsentiert werden.

Es ist bevorzugt vorgesehen, dass bei einer nur teilweisen Erfüllung des Kriteriums bestimmt wird, dass die Voraussetzungen für eine Zertifizierung des Errichterunternehmens erfüllt sind, wenn der Erfüllungskoeffizient eine entsprechende Erfüllungsbedingung erfüllt. In dem vorgenannten Beispiel kann dies etwa der Fall sein, wenn nur 49 statt der geforderten 50 Stück Sprinkleranlagen bevorratet sind.

Möglich ist auch die Erfassung einer oder mehrerer Nebenbedingungen, beispielsweise eine nachgewiesene Bestellung zur vollständigen Erfüllung des Kriteriums und/oder die Berücksichtigung der Nebenbedingung(en) bei der Bewertung.

Mit anderen Worten kann durch die Erfüllungsbedingung, ähnlich wie durch ein Bewertungsattribut, die Relevanz eines teilweise erfüllten bzw. erfüllbaren Kriteriums berücksichtigt werden, so dass auch bei geringfügigen Mängeln, die insgesamt nicht die Qualifikation eines Errichterunternehmens beeinträchtigen, eine Zertifizierung erfolgen kann. Dabei stellt die Erfüllungsbedingung sicher, dass dies für alle Errichterunternehmen in gleicher Weise, insbesondere einheitlich und objektiv, erfolgt.

Gemäß eines weiteren bevorzugten Aspekts sind mindestens zwei oder mehr Kriterien nicht zwingend zur Zertifizierung erforderlich. Dies bedeutet, dass grundsätzlich eine Zertifizierung des Errichterunternehmens auch erfolgen kann, wenn ein einzelnes dieser Kriterien nicht oder nicht vollständig erfüllt ist.

Die nicht zwingend erforderlichen Kriterien bilden vorzugsweise eine oder mehrere Gruppen, für die in der Bewertungsmetrik eine Zusatzbedingung festgelegt ist, wobei nur bei Erfüllung der Zusatzbedingung bestimmt wird, dass die Voraussetzungen für eine Zertifizierung des Errichterunternehmens erfüllt sind. Durch die Zusatzbedingung kann vorzugsweise sichergestellt werden, dass keine Zertifizierung erfolgt, wenn eine zu hohe Anzahl von Kriterien nicht oder nicht vollständig erfüllt wird. Die Bewertungsmetrik weist vorzugsweise diese Zusatzbedingung(en) auf, so dass durch Anwendung der Bewertungsmetrik die Zusatzbedingung automatisch geprüft wird.

Gemäß eines bevorzugten Aspekts wird auf Basis der Bewertungsattribute und/oder der Erfüllungskoeffizienten ein Wert berechnet, wobei der berechnete Wert zur Erfüllung der Zusatzbedingung einen Schwellwert erreichen oder überschreiten muss. Hierdurch wird erreicht, dass nicht zu viele Kriterien nur teilweise erfüllt werden und/oder dass eines oder mehrere Kriterien einer entsprechenden Relevanz in ausreichendem Maße erfüllt werden. Insbesondere können auf diese Weise in Abhängigkeit von den Kriterien und ihrer Relevanz absolute Mindestbedingungen festgelegt werden, die zur Erfüllung der Voraussetzungen für eine Zertifizierung erfüllt werden müssen, auch wenn die Kriterien an sich keine zwingend erforderlichen Kriterien sind. Auf diese Weise kann ein entsprechender Spielraum bzw. eine Kulanz in die Bewertungsmetrik implementiert werden, wobei aber ein einheitlicher und objektiver Bewertungsmaßstab sichergestellt ist.

Alternativ oder zusätzlich ist die Zusatzbedingung vorzugsweise nur dann erfüllbar, wenn mehrere Kriterien der Gruppe gemeinsam erfüllt sind. Hierdurch kann sichergestellt werden, dass keine Zertifizierung erfolgt, wenn keines der nicht zwingend erforderlichen Kriterien erfüllt ist.

Gemäß eines weiteren bevorzugten Aspekts ist die Zusatzbedingung nur dann erfüllbar, wenn mindestens ein Kriterium einer Auswahl von Kriterien der Gruppe erfüllt ist. Hierdurch kann sichergestellt werden, dass mindestens ein Kriterium einer Auswahl von Kriterien, die miteinander in einer Wechselwirkung stehen, erfüllt ist. Die Bewertungsmetrik kann eine Gruppenzugehörigkeit aufweisen und/oder bei Anwendung der Bewertungsmetrik kann die Gruppenzugehörigkeit automatisch berücksichtigt werden.

Beispielsweise kann vorgesehen sein, dass entweder eine Vorrichtung eines Typs A oder eine Vorrichtung eines Typs B zur Zertifizierung vorhanden sein muss. In diesem Fall ist weder die Vorrichtung des Typs A noch die Vorrichtung des Typs B zwingend erforderlich, es kann aber keine Zertifizierung erfolgen, wenn weder eine Vorrichtung des Typs A noch eine Vorrichtung des Typs B vorhanden ist. Dies kann durch die Zusatzbedingung in die Bewertungsmetrik implementiert sein oder werden.

Die Bewertungsmetrik, die Bewertungsattribute, die Erfüllungskoeffizienten die Nebenbedingung(en) und/oder die Zusatzbedingung dienen einer Objektivierung und Vereinheitlichung des Verfahrens. Insbesondere kann mittels dieser Mittel auch ein "Expertenwissen" systemseitig integriert werden. Zudem wird hierdurch, insbesondere in Kombination mit dem Expertenwissen, eine gewisse Toleranz bei der Zertifizierung bzw. Bewertung der Errichterunternehmen implementiert. Dies ist wünschenswert, da zwar zur Bewertung und für die Zertifizierung einerseits eine Vielzahl von Kriterien festgelegt sind, andererseits aber kleinere Mängel bei der Erfüllung einer oder mehrerer Kriterien in der Praxis die Qualifikation eines Errichterunternehmens nicht negativ beeinträchtigen und bei einer Gesamtbetrachtung durch einen Experten bestimmt würde, dass insgesamt unter der Berücksichtigung aller Umstände das Errichterunternehmen die Voraussetzungen für eine Zertifizierung erfüllt.

Ein wesentlicher Vorteil des vorschlagsgemäßen Verfahrens besteht darin, dass das Fachwissen eines Experten, der in der Lage ist, die Relevanz einzelner Kriterien für die Qualifikation des Errichterunternehmens insgesamt zu beurteilen, systemseitig integriert und automatisiert reproduziert werden kann, so dass bei der Zertifizierung ein gewisses "Augenmaß" gewährleistet ist, wobei aber dennoch ein einheitliches und objektives Verfahren realisiert ist.

Zudem besteht eine Verbesserung des vorschlagsgemäßen Verfahrens gegenüber bekannten Verfahren darin, dass das Verfahren effizienter und vereinfacht sowie beschleunigt ist.

Vorzugsweise, aber nicht zwingend, wird automatisch ein Zertifikat erstellt, wenn bestimmt wird, dass die Voraussetzungen für eine Zertifizierung des Errichterunternehmens erfüllt sind. Dies beschleunigt und vereinfacht das Verfahren.

Bevorzugt wird automatisch geprüft, ob ausreichende Informationen vorliegen, anhand derer bestimmt werden kann, ob die Voraussetzungen für eine Zertifizierung des Errichterunternehmens erfüllt sind. Falls die Prüfung ergibt, dass keine ausreichenden Informationen vorliegen, kann beispielsweise eine Warnmeldung ausgegeben werden und/oder eine weitere Fortführung des Verfahrens unterbrochen werden. Hierdurch können Fehler bei der Prüfung oder ein Scheitern dieser vermieden werden.

Entsprechend einem weiteren bevorzugten Aspekt ist es möglich, dass der Inhalt eines zur Erfüllung eines Kriteriums erforderlichen Dokuments automatisch bestimmt wird. So können Dokumente, Bescheinigungen, Urkunden o. dgl., beispielsweise zum Nachweis der Qualifikation von Mitarbeitern, eingescannt oder auf sonstige Weise elektronisch erfasst werden und/oder automatisch der Inhalt solcher Dokumente bestimmt werden.

Weiter kann auf Basis des bestimmten Inhalts automatisch bestimmt werden, ob das Kriterium, zu dessen Erfüllung das Dokument erforderlich ist, erfüllt ist. Dies ist einem schnellen und effizienten Ablauf zuträglich.

Es ist bevorzugt, dass automatisch die Echtheit eines zur Erfüllung eines Kriteriums erforderlichen Dokuments geprüft wird. Hierdurch können Fälschungen zuverlässig erkannt werden und ein Betrug verhindert werden.

Des Weiteren ist es vorteilhaft, wenn eine Plausibilitätskontrolle durchgeführt wird, bei der geprüft wird, ob die Angaben zur Erfüllung der Kriterien plausibel sind. Hierdurch können Fehler bei der Eingabe bzw. Erfassung verhindert bzw. entdeckt werden.

Gemäß einem weiteren, auch unabhängig realisierbaren Aspekt betrifft die vorliegende Erfindung ein System zur automatischen Bewertung von Errichterunternehmen für Feuerlöschanlagen, wobei das System ein Bewertungsmodul zur Bewertung von Kriterien zur Zertifizierung des Errichterunternehmens aufweist. Das System bzw. das Bewertungsmodul weist eine Bewertungsmetrik auf, mittels der Angaben zur Erfüllung der Kriterien automatisch bewertbar sind. Weiter ist das System bzw. Bewertungsmodul dazu ausgebildet, zu bestimmen, ob die Voraussetzungen für eine Zertifizierung des Errichterunternehmens erfüllt sind.

Das System ist vorzugsweise zur Durchführung des voranstehend und nachfolgend beschriebenen Verfahrens ausgebildet.

Besonders bevorzugt ist das System ein elektronisches System bzw. ein Computersystem bzw. ein Datenverarbeitungssystem.

Gemäß einem weiteren, auch unabhängig realisierbaren Aspekt betrifft die vorliegende Erfindung ein System zur Datenverarbeitung, umfassend Mittel zur Ausführung des voranstehend und nachfolgend beschriebenen Verfahrens.

Gemäß noch einem weiteren, auch unabhängig realisierbaren Aspekt betrifft die vorliegenden Erfindung ein Computerprogramm bzw. Computerprogrammprodukt, aufweisend Befehle, die bei der Ausführung des Programms durch einen Computer diesen veranlassen, das voranstehend und/oder nachfolgend beschriebene Verfahren auszuführen.

Eine "Bewertungsmetrik" im Sinne der vorliegenden Erfindung ist insbesondere ein Bewertungsschema oder ein Bewertungsalgorithmus zur Bewertung von Kriterien bzw. Angaben zur Erfüllung der Kriterien. Die Bewertungsmetrik weist vorzugsweise verschiedene Faktoren bzw. Variablen, wie beispielsweise Bewertungsattribute und/oder Erfüllungskoeffizienten auf, die den Kriterien zugeordnet werden bzw. sind. Die Bewertungsmetrik weist ferner vorzugsweise einen Algorithmus auf, mit dem automatisch bestimmbar ist, ob auf Basis der (teilweise) erfüllten Kriterien bzw. der Angaben zur Erfüllung der Kriterien die Voraussetzungen für eine Zertifizierung des errichteten Unternehmens erfüllt sind.

Die vorgenannten und nachfolgenden Aspekte und Merkmale der vorliegenden Erfindung können in unterschiedlicher Weise miteinander kombiniert, aber auch jeweils unabhängig voneinander realisiert werden.

Weitere Aspekte, Merkmale, Vorteile und Eigenschaften der vorliegenden Erfindung ergeben sich aus den Ansprüchen und der nachfolgenden Beschreibung bevorzugter Ausführungsformen anhand der Zeichnung. In der Zeichnung zeigt:

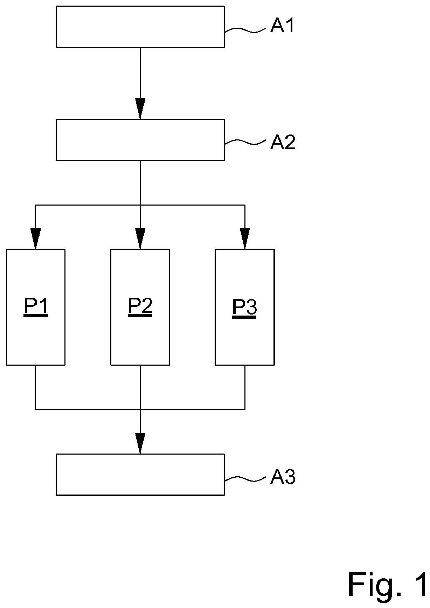

- Fig. 1: einen schematischen Ablauf eines Anerkennungsverfahrens zur Prüfung bzw. Zertifizierung von Errichterunternehmen für Feuerlöschanlagen, bei dem das vorschlagsgemäße Verfahren zur automatischen Bewertung der Errichterunternehmen durchgeführt wird; und
- Fig. 2: einen schematischen Aufbau eines Ausführungsbeispiels des vorschlagsgemäßen Systems.

Im Folgenden werden zunächst unterschiedliche Aspekte des vorschlagsgemäßen Verfahrens anhand von nicht beschränkenden Beispielen erläutert, wobei diese Aspekte einzeln und in vorteilhafter Weise in unterschiedlichen Kombinationen miteinander realisiert werden können, wobei diese Aspekte und Kombinationen jeweils eigenständige Erfindungsgegenstände bilden können, auch wenn dies zur Vermeidung von Wiederholungen im Folgenden nicht explizit erwähnt wird.

In einem ersten Schritt A1 wird ein Auftrag zur Prüfung bzw. Zertifizierung des Errichterunternehmens erteilt. Dies kann beispielsweise durch einen schriftlichen Antrag des Errichterunternehmens per E-Mail, Brief o. dgl. erfolgen.

Es ist jedoch auch möglich, dass der Auftrag automatisch erteilt wird, beispielsweise wenn eine Verlängerung eines bereits bestehenden Zertifikats für ein Errichterunternehmen erfolgen soll, bei dem erneut ein Anerkennungsverfahren bzw. Zertifizierungsverfahren durchlaufen werden muss.

In einem zweiten Schritt A2 werden vorzugsweise allgemeine Daten des Auftraggebers bzw. Errichterunternehmens und der Feuerlöschanlagenart in einem System aufgenommen. Für verschiedene Arten von Feuerlöschanlagen sind vorzugsweise verschiedene Anerkennungsverfahren vorgesehen, die sich in der Anzahl und Art von zu prüfenden Kriterien unterscheiden. Des Weiteren wird vorzugsweise die Auftragsart ermittelt bzw. bestimmt oder im System vermerkt.

Vorzugsweise sind verschiedene Auftragsarten vorgesehen, nämlich eine vorläufige Anerkennung, bei der ein Errichterunternehmen erstmalig ein Anerkennungsverfahren durchläuft, und eine Verlängerung der Anerkennung, bei der die Verlängerung eines bereits erteilten Zertifikats angestrebt wird, wobei ein erneutes Anerkennungsverfahren durchlaufen werden muss.

Anschließend werden, insbesondere abhängig von der Auftragsart, ein oder mehrere Prozesse P1, P2, P3 gestartet bzw. durchgeführt.

Bei dem Prozess P1 wird vorzugsweise überprüft, ob die zur Errichteranerkennung bzw. Zertifizierung erforderlichen Unterlagen eingegangen sind bzw. ob ausreichende Informationen vorliegen, sodass bestimmt werden kann, ob die Voraussetzungen für eine Zertifizierung erfüllt sind. Dies kann manuell durch einen Sachbearbeiter oder automatisch erfolgen.

Bei dem Prozess P2 wird vorzugsweise eine vorläufige Anerkennung eines Errichterunternehmens durchgeführt. Bei dem Prozess P3 wird vorzugsweise eine Verlängerung der Anerkennung durchgeführt.

Bei der Bewertung bzw. Prüfung eines Errichterunternehmens wird vorzugsweise nur einer der Prozesse P2 und P3 durchgeführt. Der Prozess P1 wird vorzugsweise zusätzlich bzw. parallel zu dem Prozess P2 oder P3 oder als Teil hier von durchgeführt.

Die Prozesse P2 und P3 unterscheiden sich vorzugsweise lediglich in der Anzahl und der Art von festgelegten Kriterien für die Anerkennung bzw. Zertifizierung. Daher gelten die nachfolgenden Ausführungen jeweils sowohl für den Prozess P2 als auch für den Prozess P3, sofern nichts anderes vermerkt ist.

Vorzugsweise sind bei den Prozessen P1, P2, P3 jeweils Kriterienkataloge wie Checklisten vorgesehen, welche die Kriterien aufweisen bzw. in denen die Kriterien aufgelistet sind. Die Kriterienkataloge bzw. Checklisten liegen beispielsweise in Papierform oder in elektronischer Form vor, insbesondere in Form einer Liste oder Tabelle.

Ein Kriterienkatalog bzw. eine Checkliste ist in diesem Zusammenhang vorzugsweise eine Aufstellung bzw. organisierte Zusammenstellung der Kriterien, kann also, muss jedoch nicht eine Aneinanderreihung der Kriterien in einer bestimmten Reihenfolge sein oder aufweisen.

Ein Kriterienkatalog bzw. eine Checkliste, insbesondere für den Prozess P2 bzw. für eine vorläufige Anerkennung eines Errichterunternehmens, kann eines, mehrere oder alle der folgenden Kriterien aufweisen:
- Vorhandensein bzw. Vorlage eines Handelsregisterauszugs bzw. Gewerberegisterauszugs,
- Vorhandensein einer Betriebshaftpflichtversicherung bzw. eines Nachweises hierüber,
- Vorhandensein eines Qualitätsmanagementsystems, insbesondere nach ISO 9001, bzw. eines Nachweises hierüber,
- Vorhandensein bzw. Vorlage einer Bankauskunft,
- Vorhandensein bzw. Vorlage eines Instandhaltungsvertrags bzw. eines Nachweises hierüber,
- Vorhandensein bzw. Vorlage eines Instandhaltungsvertrags (Errichter/Betreiber) bzw. eines Nachweises hierüber,
- Vorhandensein bzw. Vorlage eines Notdienstes bzw. einer Notdienst-Dokumentation bzw. eines Nachweises hierüber,
- Vorhandensein bzw. Vorlage einer Lieferzusage bzw. eines Nachweises hierüber,
- Vorhandensein bzw. Vorlage eines Organigramms bzw. eines Nachweises hierüber,
- Vorhandensein bzw. Vorlage einer, insbesondere ordnungsgemäßen bzw. Vorgaben entsprechenden, Übersicht zu Fachpersonal bzw. eines Nachweises hierüber,
- Vorhandensein bzw. Vorlage eines Antrags für einen Zugang zu einem Kundenportal bzw. eines Nachweises hierüber,
- Vorhandensein bzw. Vorlage eines Firmenlogos Vorhandensein bzw. Vorlage eines Berechnungsprogramms bzw. eines Nachweises hierüber und/oder
- Vorhandensein bzw. Vorlage von Angaben zu verbundenen Unternehmen.

Alternativ oder zusätzlich kann ein Kriterienkatalog bzw. eine Checkliste, insbesondere für einer verantwortliche Fachkraft, eines, mehrere oder alle der folgenden Kriterien aufweisen:
- Bestehen einer Prüfung durch die Fachkraft bzw. Vorhandensein oder Vorlage eines Nachweises hierüber,
- Bestehen eines Arbeitsverhältnisses mit einer Dauer von mindestens 3 Monaten vor Benennung zur verantwortlichen Fachkraft bzw. Vorhandensein oder Vorlage eines Nachweises hierüber,
- Beschäftigung bei anerkanntem Errichter in den letzten 24 Monaten bzw. Vorhandensein oder Vorlage eines Nachweises hierüber und/oder
- Besuchen bzw. Bestehen einer oder mehrerer Schulungen und/oder Fortbildungen bzw. Vorhandensein oder Vorlage eines oder mehrerer Nachweise hierüber, insbesondere bei bestehender Qualifikation.

Alternativ oder zusätzlich kann ein Kriterienkatalog bzw. eine Checkliste, insbesondere für technische Unterlagen, eines, mehrere oder alle der folgenden Kriterien aufweisen:
- Vorhandensein bzw. Vorlage eines Nachweises darüber, dass das System anerkannt ist,
- Vorhandensein bzw. Vorlage einer, insbesondere ordnungsgemäßen bzw. Vorgaben entsprechenden, Zeichnung einer oder mehrerer Demonstrationsanlagen bzw. eines Nachweises hierüber,
- Vorhandensein einer BMA-Fachkraft bzw. eines Nachweises hierüber,
- Vorhandensein einer Ersatzteilebevorratung bzw. eines Nachweises hierüber,
- Vorhandensein von Konzentrationsmessgeräten bzw. eines Nachweises hierüber und/oder
- Möglichkeit des Zugriffs auf Konzentrationsmessgeräte bzw. Vorhandensein oder Vorlage eines Nachweises hierüber.

Alternativ oder zusätzlich kann ein Kriterienkatalog bzw. eine Checkliste, insbesondere für weiteren Firmen in einem Unternehmensverbund, eines, mehrere oder alle der folgenden Kriterien aufweisen:
- Vorhandensein bzw. Vorlage einer Vereinbarung über eine Zusammenarbeit bzw. eines Nachweises hierüber,
- Vorhandensein bzw. Vorlage eines Nachweises und/oder von Angaben zu dem Unternehmensverbund,
- Vorhandensein bzw. Vorlage einer Bestätigung der Mutter bzw. Holding bzw. eines Nachweises hierüber,
- Vorhandensein bzw. Vorlage einer Kapitalbeteiligung, vorzugsweise von mindestens 75 %, bzw. eines Nachweises hierüber und/oder
- Vorhandensein bzw. Vorlage einer Prozessbeschreibung bzw. Weisungsbefugnis bzw. eines Nachweises hierüber.

Alternativ oder zusätzlich kann ein Kriterienkatalog bzw. eine Checkliste, insbesondere für eine oder mehrere weitere Betriebsstätten, eines, mehrere oder alle der folgenden Kriterien aufweisen, vorzugsweise wobei diese Kriterien mehrfach, insbesondere für jede (weitere) Betriebsstätte, vorgesehen sind:
- Vorhandensein bzw. Vorlage einer Mindestbevorratung bzw. eines Nachweises hierüber bzw. von Angaben hierzu,
- Vorhandensein bzw. Vorlage von Planung und Projektierung bzw. eines Nachweises hierüber bzw. von Angaben hierzu,
- Vorhandensein bzw. Vorlage einer Demonstrationsanlage bzw. eines Nachweises hierüber,
- Vorhandensein bzw. Vorlage eines Nachweises und/oder von Angaben zu einer Installation,
- Vorhandensein bzw. Vorlage eines Nachweises und/oder von Angaben zu einer Werkstatt
- Vorhandensein bzw. Vorlage eines Nachweises und/oder von Angaben zu einer Instandhaltung und/oder
- Vorhandensein bzw. Vorlage eines Nachweises und/oder von Angaben zu Fachkräften.

Die vorgenannten Kriterien und/oder Kriterienkataloge bzw. Checklisten können auch einzeln verwendet und/oder in unterschiedlichen Kombinationen einen Teil der Erfindung bilden.

Bei dem Prozess P2, P3 wird vorzugsweise zunächst geprüft, ob die Kriterien erfüllt sind bzw. welche der Kriterien erfüllt sind. Mit anderen Worten werden Angaben zur Erfüllung der Kriterien erfasst bzw. erstellt. Anschließend wird vorzugsweise bewertet, ob die erfüllten Kriterien ausreichend für eine Zertifizierung des Errichterunternehmens sind. Die Prüfung der Kriterien bzw. Erstellung der Angaben zur Erfüllung der Kriterien kann durch einen Sachbearbeiter oder automatisch erfolgen.

Die Prüfung, ob die Kriterien erfüllt sind, kann beispielsweise auf Basis von Unterlagen erfolgen, die durch das Errichterunternehmen einzureichen sind bzw. eingereicht wurden. Alternativ oder zusätzlich ist es möglich, dass die Prüfung vor Ort, beispielsweise bei dem Errichterunternehmen selbst und/oder während der Errichtung einer Feuerlöschanlage bei einem Kunden des Errichterunternehmens geprüft wird.

Die Angaben zur Erfüllung der Kriterien werden vorzugsweise automatisch und/oder mit technischen Hilfsmitteln erfasst. Hierzu kann einerseits vorgesehen sein, dass die Angaben über ein Eingabegerät eingebbar sind oder eingegeben werden. Alternativ oder zusätzlich können die Angaben elektronisch eingelesen werden, beispielsweise über bildgebende Verfahren wie Scannen oder Fotografieren, und/oder durch Empfangen oder Abruf von einem Server, einer Datenbank oder einer sonstigen Speichereinrichtung, die entsprechende Informationen oder Angaben bereitstellt.

Vorschlagsgemäß erfolgt die Bewertung, ob die erfüllten Kriterien für eine Zertifizierung ausreichend sind, automatisch und/oder mittels einer systemseitig vorgegebenen Bewertungsmetrik.

Vorzugsweise wird, insbesondere mittels der Bewertungsmetrik, bestimmt, ob Voraussetzungen für eine Zertifizierung des Errichterunternehmens erfüllt sind. Dies erfolgt insbesondere in dem Prozess P1, P2 und/oder P3.

Besonders bevorzugt wird die Bewertungsmetrik automatisch auf die Angaben zur Erfüllung der Kriterien angewendet. Hierbei kann es sich um ein Algorithmus oder eine mathematische Operation handeln, bei der die Anwendung der Bewertungsmetrik auf die Angaben zur Erfüllung der Kriterien zu einem Ergebnis führen, ob ein Zertifikat erteilt werden kann oder nicht. In einem Zwischenergebnis kann die Anwendung der Bewertungsmetrik auf die Angaben zur Erfüllung der Kriterien zu einem Ergebnisvektor oder ein Ergebnismatrix führen, die wiederum über eine Transformation zu dem Ergebnis führt. Alternativ oder zusätzlich kann eine Transformation Teil der Anwendung der Bewertungsmetrik auf die Angaben sein.

Das Ergebnis der Anwendung der Bewertungsmetrik ist vorzugsweise eine boolesche Variable in dem Sinne, dass das Ergebnis nur zwei Zustände hat und mit diesen zwei Zuständen eindeutig differenziert zwischen einem positiven Ergebnis, demnach die Voraussetzung für eine Zertifizierung des Errichterunternehmens erfüllt sind, und einem negativen Ergebnis, wonach die Voraussetzung für die Zertifizierung nicht erfüllt sind. Alternativ oder zusätzlich kann das Ergebnis jedoch auch weitere Informationen aufweisen, beispielsweise Angaben zu Mängeln, die es zur Zertifizierung oder trotz Zertifizierung noch zu beheben gilt.

In einem weiteren optionalen Schritt A3 kann ein Zertifikat für das Errichterunternehmen (automatisch) erstellt werden, wenn zuvor bestimmt wurde, dass die Voraussetzungen für eine Zertifizierung erfüllt sind. Anderenfalls wird kein Zertifikat erstellt. Bevorzugt ist vorgesehen, dass die Erstellung eines Zertifikats unterbunden wird, wenn die automatische Bewertung ergibt, dass Voraussetzungen für eine Zertifizierung des Errichterunternehmens nicht vorliegen. Hierdurch wird systemseitig verhindert, dass eine Zertifizierung trotz gravierender Mängel erfolgt, wodurch im Ergebnis die Sicherheit nicht nur des Zertifizierungsverfahrens, sondern auch der durch ein zertifiziertes Errichterunternehmen installierten Feuerlöschanlagen besser sichergestellt werden kann.

Die Prozesse P1, P2 und/oder P3 bilden vorzugsweise das vorschlagsgemäße Verfahren zur automatischen Bewertung von Errichterunternehmen für Feuerlöschanlagen.

Die Prozesse P1, P2, P3 können auch durch einen einzigen Prozess gebildet sein und/oder miteinander verknüpft sein.

Vorzugsweise ist mindestens eines der Kriterien zwingend zur Zertifizierung erforderlich. Dies ist vorzugsweise systemseitig in der Bewertungsmetrik vorgegeben bzw. festgelegt. Wenn ein zwingend erforderliches Kriterium nicht erfüllt ist, wird vorzugsweise bestimmt, dass kein Zertifikat für das Errichterunternehmen ausgestellt werden kann bzw. die Voraussetzungen für die Zertifizierung nicht erfüllt sind, insbesondere unabhängig davon, ob und inwieweit andere Kriterien erfüllt sind.

Ein zwingend erforderliches Kriterium könnte beispielsweise darin bestehen, dass bei dem Errichterunternehmen eine verantwortliche Fachkraft zur Errichtung der Feuerlöschanlage bzw. eine bestimmte Feuerlöschanlagenart benannt ist oder die benannte Fachkraft über die erforderliche Qualifikation, beispielsweise einen Abschluss gemäß der Stufe 6 des europäischen Qualifikationsrahmens, verfügt.

Den Kriterien ist vorzugsweise mittels der Bewertungsmetrik ein Bewertungsattribut zugeordnet. Das Bewertungsattribut ist insbesondere eine Größe, durch die bestimmt bzw. repräsentiert wird, welche Relevanz dem Kriterium bei der Bewertung bzw. Prüfung der Qualifikation des Unternehmens zur Errichtung von Feuerlöschanlagen zukommt.

Beispielsweise kann in einem Bewertungsattribut festgelegt sein, dass ein Kriterium zwingend erforderlich ist.

Alternativ oder zusätzlich kann das Bewertungsattribut durch einen Wert, eine Zahl, einen Faktor, einen Koeffizienten oder eine Gewichtung gebildet sein, insbesondere wobei der Zahlenwert zu der Relevanz des Kriteriums korrespondiert. Dementsprechend können besonders wichtige Kriterien hohe Zahlen und eher nachrangigen Kriterien niedrige Zahlen zugeordnet werden (oder umgekehrt). Beispielsweise können die Bewertungsattribute durch Zahlen von 0 bis 1 oder von 0 bis 100 o. dgl. gebildet sein.

Insbesondere können auch verschiedene Typen von Bewertungsattributen vorgesehen sein.

Beispielsweise können die Kriterien in zwei oder mehr Klassen eingeteilt werden, insbesondere eine erste Klasse von zwingend erforderlichen Kriterien und eine zweite Klasse von nicht zwingend erforderlichen Kriterien. Den Kriterien verschiedener Klassen können hierbei mehrere Bewertungsattribute, insbesondere verschiedene Typen von Bewertungsattributen, zugeordnet sein.

In einem bevorzugten Aspekt ist den Kriterien jeweils ein Bewertungsattribut in Form einer booleschen Variable o. dgl. zugeordnet. So kann bei der Prüfung bzw. Bewertung der Kriterien unmittelbar bestimmt werden, wenn die Voraussetzungen für eine Zertifizierung nicht erfüllt sind, nämlich wenn ein zwingend erforderliches Kriterium nicht erfüllt ist.

Alternativ oder zusätzlich zu einem Bewertungsattribut in Form einer booleschen Variable kann den Kriterien, insbesondere den Kriterien der zweiten Klasse, ein Bewertungsattribut beispielsweise in Form eines Zahlenwertes o. dgl. zugeordnet sein, welches die Relevanz des Kriteriums repräsentiert.

Vorzugsweise ist mindestens eines der Kriterien teilweise erfüllbar.

Beispiele für teilweise erfüllbare Kriterien sind Kriterien, in denen Mindestmengen für zu bevorratende Ausführungsteile festgelegt sind. Ein derartiges Kriterium kann dadurch teilweise erfüllt sein, dass die Anzahl der bevorrateten Ausführungsteile nicht mit der in dem Kriterium festgelegten bzw. geforderten Anzahl übereinstimmt bzw. diese unterschreitet. Ein solches Kriterium kann alternativ oder zusätzlich auch dadurch teilweise erfüllt sein, dass zumindest einige der Ausführungsteile nicht der geforderten Spezifikation entsprechen.

Einem teilweise erfüllbaren Kriterium wird bei der Bewertung mittels der Bewertungsmetrik vorzugsweise ein Erfüllungskoeffizient zugeordnet, der repräsentiert, in welchem Maße das Kriterium erfüllt ist. Der Erfüllungskoeffizient kann insbesondere zusätzlich zu dem Bewertungsattribut vorgesehen sein.

Der Erfüllungskoeffizient kann beispielsweise einen Faktor bzw. eine Zahl aufweisen oder hierdurch gebildet sein. Wenn beispielsweise in dem Kriterium festgelegt ist, dass N Teile einer bestimmten Spezifikation bevorratet werden müssen und bei der Prüfung festgestellt wird, dass lediglich M (M<N) Teile dieser Spezifikation bevorratet sind, wobei M und N (natürliche) Zahlen bezeichnen, so wird diesem Kriterium mittels der Bewertungsmetrik vorzugsweise der Erfüllungskoeffizient M/N (also der Quotient aus M und N) zugeordnet.

Alternativ oder zusätzlich kann der Erfüllungskoeffizient durch eine Zahl bzw. einen Faktor gebildet sein, wenn eine Spezifikation von bevorrateten Teilen von der geforderten Spezifikation abweicht, wobei der Faktor eine Maßzahl für die Abweichung zwischen der geforderten und der tatsächlichen Spezifikation ist. Beispielsweise kann ein solcher Faktor einen Wert von 0 bis 1 annehmen, wobei der Faktor 1 eine vollständige Entsprechung der geforderten Spezifikation repräsentiert und der Faktor 0 repräsentiert, dass die tatsächliche Spezifikation in keiner Weise der geforderten Spezifikation entspricht.

Es ist vorzugsweise vorgesehen, dass bei einer nur teilweisen Erfüllung eines teilweise erfüllbaren Kriteriums bestimmt wird, dass die Voraussetzungen für eine Zertifizierung des Errichterunternehmens erfüllt sind, wenn der Erfüllungskoeffizient eine entsprechende Erfüllungsbedingung erfüllt.

Dies kann dadurch realisiert sein, dass der Erfüllungskoeffizient durch eine Zahl oder einen Faktor, wie zuvor beschrieben, gebildet ist und in der Erfüllungsbedingung ein Mindestwert für die Zahl bzw. den Faktor festgelegt ist.

Beispielsweise kann das teilweise erfüllbare Kriterium darin bestehen, dass gefordert wird, dass 50 Stück eines bestimmten Sprinklertyps bevorratet werden müssen. In diesem Fall kann der Erfüllungsfaktor durch den Quotienten M/50 gebildet werden, wobei M die Anzahl der tatsächlich bevorrateten Sprinkler des bestimmten Sprinklertyps bezeichnet. Als Erfüllungsbedingung kann festgelegt sein, dass der Erfüllungskoeffizient mindestens den Wert 0,9 (entsprechend einer Mindestmenge von 45 Stück) betragen muss, damit die Voraussetzungen für eine Zertifizierung erfüllt sind.

In einem Aspekt der vorliegenden Erfindung sind mindestens zwei Kriterien nicht zwingend zur Zertifizierung erforderlich oder nicht zwingend vollständig zu erfüllen, wobei diese Kriterien eine Gruppe bilden. Für diese Gruppe ist in der Bewertungsmetrik vorzugsweise eine Zusatzbedingung festgelegt, die erfüllt werden muss, um insgesamt die Voraussetzungen für eine Zertifizierung des Errichterunternehmens zu erfüllen.

Vorzugsweise ist eine Gruppe von nicht zwingend zur Zertifizierung erforderlichen Kriterien eine (echte) Teilmenge der Klasse von nicht zwingend zur Zertifizierung erforderlichen Kriterien. Es ist jedoch auch möglich, dass die Gruppe von nicht zwingend zur Zertifizierung erforderlichen Kriterien identisch ist mit der Klasse von nicht zwingend zur Zertifizierung erforderlichen Kriterien.

Die Zusatzbedingung ermöglicht es bevorzugt, eine gewisse Toleranz bei der Bewertung der Qualifikation des Errichterunternehmens in die Bewertungsmetrik zu implementieren, sodass es bei geringen Mängeln wie der nicht vollständigen Erfüllung einiger weniger und/oder eher unwichtiger Kriterien trotzdem möglich ist, das Errichterunternehmen zu zertifizieren. Die Zusatzbedingung verhindert dabei auf der anderen Seite, dass eine Zertifizierung erfolgt, wenn zu viele Kriterien oder bestimmte Kombinationen von Kriterien nicht erfüllt sind.

In der Zusatzbedingung können Anforderungen für die Erfüllungskoeffizienten festgelegt sein, sodass eine Zertifizierung des Errichterunternehmens nur bei hinreichender Erfüllung der teilweise erfüllbaren Kriterien möglich ist.

Eine Gruppe von nicht zwingend erforderlichen Kriterien im vorgenannten Sinne kann durch eine Kombination von zwei oder mehr der folgenden, bereits weiter oben genannten und hier nur stichwortartig wiedergegebenen Kriterien, insbesondere bezüglich einer vorläufigen Anerkennung eines Errichterunternehmens, gebildet sein: Handelsregisterauszug/Gewerberegisterauszug, Betriebshaftpflichtversicherung, Qualitätsmanagementsystem (nach ISO 9001), Bankauskunft, Instandhaltungsvertrag, Instandhaltungsvertrag (Errichter/Betreiber), Dokumentation Notdienst, Lieferzusage, Organigramm, (ordnungsgemäße) Übersicht Fachpersonal, Antrag Zugang Kundenportal, Firmenlogo und/oder Berechnungsprogramm.

Alternativ oder zusätzlich kann eine (weitere) Gruppe von nicht zwingend erforderlichen Kriterien im vorgenannten Sinne durch eine Kombination von zwei oder mehr der folgenden, bereits weiter oben genannten und hier nur stichwortartig wiedergegebenen Kriterien, insbesondere bezüglich einer verantwortlichen Fachkraft, gebildet sein: Bestehen einer Prüfung, Arbeitsverhältnis mindestens 3 Monate vor Benennung, letzte 24 Monate bei anerkanntem Errichter und/oder Schulungsnachweise (bei Bestehen der Qualifikationen).

Alternativ oder zusätzlich kann eine (weitere) Gruppe von nicht zwingend erforderlichen Kriterien im vorgenannten Sinne durch eine Kombination von zwei oder mehr der folgenden, bereits weiter oben genannten und hier nur stichwortartig wiedergegebenen Kriterien, insbesondere bezüglich technischer Unterlagen, gebildet sein: System anerkannt, Zeichnung Demonstrationsanlage vorhanden, Zeichnung Demoanlage in Ordnung, Vorhandensein BMA-Fachkraft, Ersatzteilebevorratung, Vorhandensein von Konzentrationsmessgeräten und/oder Möglichkeit des Zugriffs auf Konzentrationsmessgeräte.

Alternativ oder zusätzlich kann eine (weitere) Gruppe von nicht zwingend erforderlichen Kriterien im vorgenannten Sinne durch eine Kombination von zwei oder mehr der folgenden, bereits weiter oben genannten und hier nur stichwortartig wiedergegebenen Kriterien, insbesondere bezüglich weiterer Firmen in einem Unternehmensverbund, gebildet sein: Vereinbarung Zusammenarbeit, Angaben zu dem Unternehmensverbund, Bestätigung der Mutter bzw. Holding, Kapitalbeteiligung und/oder Prozessbeschreibung bzw. Weisungsbefugnis.

Alternativ oder zusätzlich kann eine (weitere) Gruppe von nicht zwingend erforderlichen Kriterien im vorgenannten Sinne durch eine Kombination von zwei oder mehr der folgenden, bereits weiter oben genannten und hier nur stichwortartig wiedergegebenen Kriterien, insbesondere bezüglich weiterer Betriebsstätten, gebildet sein: Mindestbevorratung, Planung und Projektierung, Demonstrationsanlage, Installation, Werkstatt, Instandhaltung, Angaben zu Fachkräften.

Die vorgenannten Kriterien und/oder Kriterienkataloge bzw. Checklisten können auch einzeln verwendet und/oder in unterschiedlichen Kombinationen eine oder mehrere Gruppen bilden und so insbesondere einen Teil der Erfindung bilden. Gemäß einem Aspekt wird auf Basis der Bewertungsattribute und/oder der Erfüllungskoeffizienten ein Wert berechnet, der zur Erfüllung der Zusatzbedingung einen Schwellwert erreichen oder überschreiten muss.

Bevorzugt sind die Bewertungsattribute und/oder Erfüllungskoeffizienten jeweils durch Zahlenwerte, beispielsweise von 0 bis 100 oder von 0 bis 1, gebildet, wobei die Bewertungsattribute und/oder Erfüllungskoeffizienten die Variablen einer Funktion bilden, mittels der in Abhängigkeit der Bewertungsattribute und/oder Erfüllungskoeffizienten der Wert berechnet wird, der zur Erfüllung der Zusatzbedingung einen Schwellwert erreichen oder überschreiten muss.

Gemäß einem weiteren Aspekt der vorliegenden Erfindung ist in der Zusatzbedingung vorzugsweise eine Mindestanzahl an Kriterien festgelegt und/oder sind in der Zusatzbedingung eine oder mehrere Kombinationen von Kriterien festgelegt, die zur Erfüllung der Zusatzbedingung erfüllt oder zumindest in ausreichendem Maße erfüllt sein müssen.

Gemäß einem weiteren Aspekt der vorliegenden Erfindung ist die Zusatzbedingung vorzugsweise nur dann erfüllbar, wenn mindestens ein Kriterium einer Auswahl von Kriterien der Gruppe erfüllt ist. Hierdurch kann berücksichtigt werden, dass gegebenenfalls verschiedene Maßnahmen in gleicher Weise dazu geeignet sind, ein bestimmtes Ziel zu erreichen, auf dessen Basis die Qualifikation eines Errichterunternehmens bewertet werden kann. Falls mehrere alternative Maßnahmen zum Erreichen eines Ziels in Frage kommen, können diese verschiedenen Maßnahmen durch verschiedene Kriterien repräsentiert sein, die jeweils für sich genommen nicht zwingend erforderlich sind. Durch die Zusatzbedingung kann dann festgelegt sein oder werden, dass jedenfalls mindestens eines dieser alternativen Kriterien für eine erfolgreiche Zertifizierung erfüllt sein muss. Mit anderen Worten wird so die Möglichkeit geschaffen, in bestimmten Fällen dem Errichterunternehmen freizustellen, in welcher Weise eine bestimmte Anforderung erfüllt wird, wenn hierzu grundsätzlich verschiedene Maßnahmen in Betracht kommen.

Vorzugsweise wird automatisch geprüft, ob ausreichende Informationen vorliegen, anhand derer bestimmt werden kann, ob die Voraussetzungen für eine Zertifizierung des Errichterunternehmens erfüllt sind. Insbesondere kann automatisch bzw. systemseitig der Eingang von erforderlichen oder angeforderten Unterlagen, anhand derer die Qualifikation des Errichterunternehmens beurteilt wird, geprüft werden. Beispielsweise kann vorgesehen sein, dass die benötigten Unterlagen von dem Errichterunternehmen an eine spezielle E-Mail-Adresse geschickt werden oder in eine spezielle Datenbank 2 hochgeladen werden, sodass der Eingang und/oder Inhalt der Unterlagen automatisch geprüft werden kann.

Es ist möglich, dass eine Warnung ausgegeben wird, wenn die vorliegenden Informationen nicht ausreichen, um zu bestimmen, ob die Voraussetzungen für eine Zertifizierung des Errichterunternehmens erfüllt sind.

Gemäß einem bevorzugten Aspekt der vorliegenden Erfindung ist vorgesehen, dass gemäß eines Kriteriums ein bestimmtes Dokument vorliegen muss. Das Vorliegen eines solchen Dokuments kann automatisch bestimmt werden. Besonders bevorzugt wird ein solches Dokument automatisch erkannt und die Authentizität des Dokuments verifiziert. Dies kann beispielsweise durch Texterkennung und/oder Strukturanalyse erfolgen. Alternativ oder zusätzlich kann vorgesehen sein, dass ein Inhalt eines oder mehrerer Dokumente Informationen und/oder Angaben zur Erfüllung eines Kriteriums enthält. Derartige Informationen und/oder Angaben können automatisch bestimmt werden, beispielsweise durch Texterkennung oder Auslesen von Text aus einem derartigen Dokument. Dokumente können zu diesem Zweck digitalisiert werden, beispielsweise gescannt, fotografiert o. dgl. Alternativ oder zusätzlich können Digitaldokumente eingelesen, abgerufen und/oder empfangen werden. Im Anschluss kann eine Analyse bzw. Verifikation erfolgen, um zu bestimmen, ob und inwieweit ein Kriterium erfüllt ist.

Vorzugsweise wird auf Basis des automatisch bestimmten Inhalts eines Dokuments automatisch bestimmt, ob ein Kriterium, zu dessen Erfüllung ein Dokument erforderlich ist, erfüllt ist.

Beispielsweise kann ein Kriterium darin bestehen bzw. in einem Kriterium gefordert sein, dass eine Betriebshaftpflichtversicherung mit einer definierten Deckungssumme vorhanden ist. Es kann dann vorzugsweise automatisch bestimmt bzw. verifiziert werden, ob ein Dokument vorliegt, in welchem der Abschluss einer entsprechenden Betriebshaftpflichtversicherung bestätigt wird.

Es ist vorteilhaft, wenn die Echtheit eines zur Erfüllung eines Kriteriums erforderlichen Dokuments automatisch geprüft wird. Dies kann durch eine Ermittlung bzw. Prüfung des Aufbaus bzw. der Struktur des Dokuments, durch Prüfung charakteristischer Merkmale und/oder bestimmter Sicherheitsmerkmale wie Wasserzeichen, Siegel o.dgl., durch Abgleichen mit einem Referenzdokument und/oder durch Prüfen einer elektronischen Signatur erfolgen. Hierdurch kann einem Betrug vorgebeugt werden.

Des Weiteren wird vorzugsweise eine Plausibilitätskontrolle durchgeführt, bei der geprüft wird, ob Angaben zur Erfüllung der Kriterien plausibel sind. Insbesondere können auf diese Weise widersprüchliche Angaben identifiziert und Fehler, beispielsweise durch falsche oder fehlerhaft eingelesene Eingaben, vermieden werden.

Beispielsweise ist es möglich, dass angegeben wurde, dass für einen Mitarbeiter kein erforderlicher Schulungsnachweis vorhanden ist, obwohl ein solcher Schulungsnachweis durch das System bereits erfasst und geprüft wurde. In diesem Fall kann zwecks Korrektur oder Prüfung eine entsprechende Meldung ausgegeben werden.

In einer bevorzugten Weiterbildung der vorliegenden Erfindung wird ein Zertifikat automatisch erstellt bzw. eine Zertifizierung automatisch erteilt, wenn mit dem vorschlagsgemäßen Verfahren bzw. System bestimmt wird, dass die Voraussetzungen für eine Zertifizierung des Errichterunternehmens erfüllt sind.

Ganz bevorzugt wird die Erstellung eines Zertifikats unterbunden, also insbesondere die Herstellung bzw. der Druck eines Zertifikats, insbesondere in Form einer Urkunde, verhindert, wenn die Voraussetzungen für eine Zertifizierung des Errichterunternehmens nicht erfüllt sind. Zu diesem Zweck ist die Erstellung bzw. Herstellung eines Zertifikats bevorzugt zwingend an das System bzw. die Durchführung des Verfahrens gebunden, derart, dass ein Zertifikat ausschließlich unter der Voraussetzung erstellt bzw. hergestellt werden kann, dass die Voraussetzungen für die Zertifizierung des Errichterunternehmens erfüllt sind.

Das Verfahren wird vorzugsweise auf einem eines hierzu ausgebildeten bzw. mittels eines hierzu ausgebildeten Systems S durchgeführt. Das System S ist vorzugsweise ein System S zur Datenverarbeitung bzw. ein Computersystem.

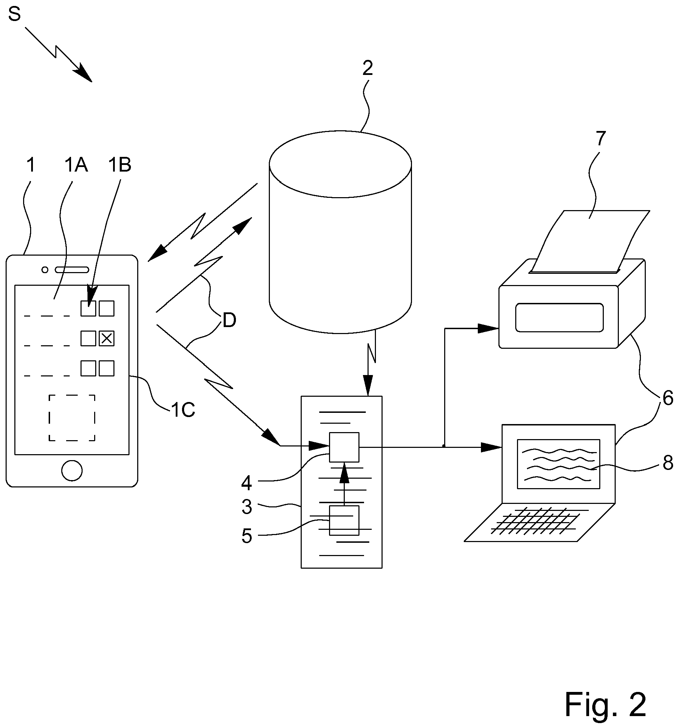

Fig. 2 zeigt ein Ausführungsbeispiel eines vorschlagsgemäßen Systems S.

Das vorschlagsgemäße System S weist vorzugsweise eine Eingabevorrichtung 1 zur Eingabe von Angaben 1B zur Erfüllung von Kriterien 1A auf.

Bei der Eingabevorrichtung 1 handelt es sich besonders bevorzugt um ein Smartphone oder ein Tablet oder allgemein ein tragbares Eingabegerät. Die Eingabevorrichtung 1 kann jedoch alternativ oder zusätzlich auch ein ortsgebundenes Eingabegerät sein.

Die Eingabevorrichtung 1 kann eine Anzeigevorrichtung 1C wie ein Display aufweisen. Die Anzeigevorrichtung 1C kann zwecks Eingabe berührungsempfindlich sein, sodass die Angaben 1B zur Erfüllung von Kriterien 1A hierüber eingebbar sind.

Ferner kann die Eingabevorrichtung 1 eine Benutzerführung aufweisen. Die Benutzerführung kann in Form einer App oder eines Web-Interfaces eines Servers o. dgl. realisiert sein. Hier sind jedoch auch andere Lösungen denkbar.

Die Benutzerführung ist vorzugsweise dazu ausgebildet, einen Benutzer, besonders bevorzugt einen Mitarbeiter einer Zertifizierungsstelle oder eines Errichterunternehmens, strukturiert durch die zu erfüllenden Kriterien 1A zu leiten und hierbei Eingaben als Angaben 1B zu den jeweiligen Kriterien 1A zu erfassen und diesen zuzuordnen. Die Benutzerführung zeigt zu diesem Zweck vorzugsweise Kriterien 1A auf der Anzeigevorrichtung 1C an und ermöglicht die Eingabe der hierzu jeweils korrespondierenden Angaben 1B. Die Eingabe wird hierbei bevorzugt durch die Eingabevorrichtung 1 als Angabe 1B erfasst und dem jeweiligen Kriterium 1A zugeordnet.

Grundsätzlich ist vorzugsweise vorgesehen, dass eine Eingabe von Daten bzw. Angaben 1B, insbesondere über die Eingabevorrichtung 1, durch einen Mitarbeiter einer Zertifizierungsstelle erfolgt. Es ist jedoch auch möglich, dass derartige Eingaben durch einen Mitarbeiter eines Errichterunternehmens bzw. zu bewertenden Unternehmens erfolgen.

Das vorschlagsgemäße System S kann eine Datenbank 2 aufweisen. Diese Datenbank 2 kann, insbesondere ergänzende, Angaben 1B zur Erfüllung der Kriterien 1A bereitstellen. Alternativ oder zusätzlich können die durch die Eingabevorrichtung 1 erfassten Angaben 1B vollständig oder teilweise in der Datenbank 2 gespeichert werden.

Das vorschlagsgemäße System S kann einen oder mehrere Server 3 aufweisen. Der oder die Server 3 können dazu ausgebildet sein, die Angaben 1B bzw. die Kriterien 1A automatisch zu bewerten. Der Server 3 ist im Darstellungsbeispiel eine stationäre und/oder zentrale Recheneinrichtung. Alternativ oder zusätzlich kann der Server 3 jedoch auch eine Softwarekomponente und/oder ein Modul sein und/oder einen Teil der Datenbank 2 und/oder der Eingabevorrichtung 1 bilden.

Der Server 3 kann die Datenbank 2 aufweisen oder diese bilden.

Vorzugsweise bilden/sind der bzw. die Server 3 und/oder die Datenbank 2 eine Cloud bzw. ein Cloud-System oder ein Teil davon. Insbesondere können der/die Server 3 und/oder die Datenbank 2 an einem beliebigen Standort stationiert sein und sind nicht zwingend bei der Zertifizierungsstelle stationiert.

Das System S weist vorzugsweise einen Prozessor 4 auf, der mit der vorschlagsgemäßen Bewertungsmetrik 5 ausgestattet und hierdurch dazu eingerichtet ist, die Voraussetzungen für die Zertifizierung des Errichterunternehmens zu überprüfen.

Der Prozessor 4 ist vorzugsweise Teil des Servers 3 der Zertifizierungsstelle.

Das System S kann eine Datenschnittstelle D zum Einlesen, Abrufen und/oder Empfangen von Angaben 1B zur Erfüllung der Kriterien 1A aufweisen. Auf diese Weise kann das System S dem Prozessor 4 mittels der Eingabevorrichtung 1 erfasste oder durch die Datenbank 2 zur Verfügung gestellte Angaben 1B bereitstellen, die der Prozessor 4 der Bewertung zugrunde legt.

Die Bewertung erfolgt mit dem System S vorzugsweise durch Anwendung der Bewertungsmetrik 5 auf die Angaben 1B zur Erfüllung der Kriterien 1A oder ist hierzu ausgebildet. Im Einzelnen erfolgt dies vorzugsweise wie zuvor im Zusammenhang mit dem vorschlagsgemäßen Verfahren erläutert bzw. das System S ist hierzu ausgebildet.

Das System S weist vorzugsweise eine oder mehrere Ausgabeeinrichtungen 6 auf, mittels derer das durch den Prozessor 4 unter Anwendung der Bewertungsmetrik 5 auf die Angaben 1B bzw. Kriterien 1A generierte Ergebnis 8 ausgegeben und/oder das Zertifikat 7 erstellt werden kann.

Die Zertifikatserstellung kann an die Bedingung geknüpft sein, dass die automatische Bewertung der Kriterien 1A bzw. Angaben 1B mittels der Bewertungsmetrik 5 ergeben hat, dass die Voraussetzung zur Zertifizierung des Errichterunternehmens erfüllt sind.

Die Eingabevorrichtung 1 ist im Darstellungsbeispiel über eine bevorzugt drahtlosen Datenverbindung D mit dem Prozessor 4 koppelbar, der sich im Darstellungsbeispiel gemäß Fig. 2 in einem Server 3 befindet. Hier sind jedoch auch andere Lösungen möglich.

Ferner ist es alternativ oder zusätzlich möglich, dass die Angaben 1B zur Erfüllung der Kriterien 1A über eine bevorzugt drahtlose Datenverbindung D an die Datenbank 2 übermittelt und/oder mittels der Datenbank 2 zwischengespeichert werden. Hier kann jedoch auch vorgesehen sein, dass die Datenbank 2 keinerlei Datenverbindung D mit der Eingabevorrichtung 1 aufweist und nur ergänzende Angaben 1B zur Erfüllung der Kriterien 1A bereitstellt.

Der Prozessor 4 wendet vorzugsweise die Bewertungsmetrik 5 auf die von der Eingabevorrichtung 1 und/oder der Datenbank 2 empfangenen bzw. abgerufenen Angaben 1B zur Erfüllung der Kriterien 1A an. Hierdurch kann das Ergebnis 8 erzeugt und mittels einer Ausgabeeinrichtung 6 ausgegeben werden. Alternativ oder zusätzlich wird die Erzeugung, insbesondere der Druck, des Zertifikats 7 freigegeben oder automatisch ausgelöst, wenn automatisch bestimmt worden ist, dass die Voraussetzung für eine Zertifizierung des Errichterunternehmens erfüllt sind.

Die Erfindung betrifft in einem weiteren, auch unabhängig realisierbaren Aspekt ein Computerprogramm bzw. Computerprogrammprodukt, aufweisend Befehle, die bei der Ausführung des Programms durch einen Computer diesen veranlassen, das voranstehend beschriebene Verfahren durchzuführen.

Bei dem Computerprogramm bzw. Computerprogrammprodukt oder einem Teil hiervon handelt es sich bevorzugt um eine App für ein Tablet oder Smartphone o. dgl., mittels derer Angaben 1B zur Erfüllung der Kriterien 1A eingebbar und einem Bewertungsmodul zuführbar sind. Mittels des Bewertungsmoduls kann die Bewertungsmetrik auf diese und/oder weitere Angaben 1B angewendet werden, um automatisch zu bestimmen, ob die Voraussetzungen für eine Zertifizierung des Errichterunternehmens erfüllt sind. Das Bewertungsmodul kann eine Soft- und/oder Hardwarekomponente sein, die auf dem Prozessor 4 ausgeführt oder ausführbar ist.

Vorzugsweise weist das System S, das Computerprogramm bzw. Computerprogrammprodukt, der Server 3 bzw. der Prozessor 4 das Bewertungsmodul zur Bewertung der Kriterien 1A auf. Das Bewertungsmodul kann hierbei die Bewertungsmetrik 5 und Instruktionen zur Anwendung dieser auf die Angaben 1B bzw. Kriterien 1A aufweisen.

Einzelne Aspekte und Merkmale der vorliegenden Erfindung können unabhängig voneinander, aber auch in unterschiedlichen Kombinationen realisierbar sein.

### Bezugszeichenliste:

- 1: Eingabevorrichtung
- 1A: Kriterien
- 1B: Angaben
- 1C: Display
- 2: Datenbank
- 3: Server
- 4: Prozessor
- 5: Bewertungsmetrik
- 6: Ausgabeeinrichtung
- 7: Zertifikat
- 8: Ergebnis

- A1: erster Schritt
- A2: zweiter Schritt
- A3: dritter Schritt
- D: Datenverbindung
- P1: Prozess
- P2: Prozess
- P3: Prozess
- S: System

## Patentansprüche

1. Verfahren zur automatischen Bewertung von Errichterunternehmen, vorzugsweise für Feuerlöschanlagen, wobei mehrere Kriterien zur Zertifizierung eines Errichterunternehmens festgelegt sind, wobei systemseitig eine Bewertungsmetrik (5) vorgegeben ist, mittels der Angaben zur Erfüllung der Kriterien automatisch bewertet werden und bestimmt wird, ob Voraussetzungen für eine Zertifizierung des Errichterunternehmens erfüllt sind.

2. Verfahren nach Anspruch 1,
**dadurch gekennzeichnet, dass** mindestens eines der Kriterien zwingend zur Zertifizierung erforderlich ist, sodass bestimmt wird, dass die Voraussetzungen für eine Zertifizierung des Errichterunternehmens nicht erfüllt sind, wenn dieses Kriterium nicht erfüllt ist.

3. Verfahren nach Anspruch 1 oder 2,
**dadurch gekennzeichnet, dass** jedem Kriterium mittels der Bewertungsmetrik (5) ein Bewertungsattribut zugeordnet ist.

4. Verfahren nach einem der voranstehenden Ansprüche,
**dadurch gekennzeichnet, dass** mindestens eines der Kriterien teilweise erfüllbar ist, wobei diesem Kriterium bei der Bewertung mittels der Bewertungsmetrik (5), insbesondere zusätzlich zu einem Bewertungsattribut, ein Erfüllungskoeffizient zugeordnet wird, der repräsentiert, in welchem Maße das Kriterium erfüllt ist.

5. Verfahren nach Anspruch 4,
**dadurch gekennzeichnet, dass** bei einer nur teilweisen Erfüllung des Kriteriums bestimmt wird, dass die Voraussetzungen für eine Zertifizierung des Errichterunternehmens erfüllt sind, wenn der Erfüllungskoeffizient eine entsprechende Erfüllungsbedingung erfüllt.

6. Verfahren nach einem der voranstehenden Ansprüche,
**dadurch gekennzeichnet, dass** mindestens zwei Kriterien nicht zwingend zur Zertifizierung erforderlich sind, wobei diese Kriterien eine Gruppe bilden, für die in der Bewertungsmetrik (5) eine Zusatzbedingung festgelegt ist, wobei nur bei Erfüllung der Zusatzbedingung bestimmt wird, dass die Voraussetzungen für eine Zertifizierung des Errichterunternehmens erfüllt sind.

7. Verfahren nach Anspruch 6,
**dadurch gekennzeichnet, dass** auf Basis der Bewertungsattribute und/oder der Erfüllungskoeffizienten ein Wert berechnet wird und der berechnete Wert zur Erfüllung der Zusatzbedingung einen Schwellwert erreichen oder überschreiten muss.

8. Verfahren nach Anspruch 6 oder 7,
**dadurch gekennzeichnet, dass** die Zusatzbedingung nur dann erfüllbar ist, wenn mehrere Kriterien der Gruppe gemeinsam erfüllt sind.

9. Verfahren nach einem der Ansprüche 6 bis 8,
**dadurch gekennzeichnet, dass** die Zusatzbedingung nur dann erfüllbar ist, wenn mindestens ein Kriterium einer Auswahl von Kriterien der Gruppe erfüllt ist.

10. Verfahren nach einem der voranstehenden Ansprüche,
**dadurch gekennzeichnet, dass** automatisch ein Zertifikat erstellt wird, wenn bestimmt wird, dass die Voraussetzungen für eine Zertifizierung des Errichterunternehmens erfüllt sind.

11. Verfahren nach einem der voranstehenden Ansprüche,
**dadurch gekennzeichnet, dass** automatisch geprüft wird, ob ausreichende Informationen vorliegen, anhand derer bestimmt werden kann, ob die Voraussetzungen für eine Zertifizierung des Errichterunternehmens erfüllt sind.

12. Verfahren nach einem der voranstehenden Ansprüche,
**dadurch gekennzeichnet, dass** der Inhalt eines zur Erfüllung eines Kriteriums erforderlichen Dokuments automatisch bestimmt wird, vorzugsweise wobei auf Basis des bestimmten Inhalts automatisch bestimmt wird, ob das Kriterium erfüllt ist.

13. Verfahren nach einem der voranstehenden Ansprüche,
**dadurch gekennzeichnet, dass** automatisch die Echtheit eines zur Erfüllung eines Kriteriums erforderlichen Dokuments geprüft wird.

14. Verfahren nach einem der voranstehenden Ansprüche,
**dadurch gekennzeichnet, dass** eine Plausibilitätskontrolle durchgeführt wird, bei der geprüft wird, ob Angaben zur Erfüllung der Kriterien plausibel sind.

15. System (S) zur automatischen Bewertung von Errichterunternehmen für Feuerlöschanlagen,
wobei das System (S) ein Bewertungsmodul zur Bewertung von Kriterien zur Zertifizierung eines Errichterunternehmens aufweist, wobei das System (S) bzw. das Bewertungsmodul eine Bewertungsmetrik (5) aufweist, mittels der Angaben zur Erfüllung der Kriterien automatisch bewertbar sind, und wobei das System (S) bzw. Bewertungsmodul dazu ausgebildet ist, zu bestimmen, ob die Voraussetzungen für eine Zertifizierung des Errichterunternehmens erfüllt sind, vorzugsweise wobei das System (S) zur Durchführung eines Verfahrens nach einem der voranstehenden Ansprüche ausgebildet ist.

16. Computerprogramm, aufweisend Befehle, die bei der Ausführung des Programms durch einen Computer diesen veranlassen, das Verfahren nach einem der Ansprüche 1 bis 14 auszuführen.
